# EUROPEAN PATENT APPLICATION

(11) **EP 0 633 701 A2**
(43) Date of publication of application: **11.01.1995**
(21) Application number: 94110461.4
(22) Date of filing: 05.07.1994
(51) Int. Cl.: H04N 7/32, H04N 7/28, H04N 7/34

(54) **Method and device for the compression of a digital video signal**

(30) Priority: 05.07.1993 FI 933094
(71) Applicant: OY NOKIA AB, SF-00130 Helsinki (FI)
(72) Inventor: Haikonen, Pentti, SF-02600 Espoo (FI)
(74) Representative: Schroeter, Helmut

(57) **Abstract**

The invention relates to a method and a device for the compression of a digitally encoded video image in connection with transmission. In order that a satisfactory prediction block could be found irrespective of the extent of motion occurring in the image, (a) at least the first image in a video sequence is transmitted as such or compressed to a receiver, (b) image content is subjected to classification at the beginning of the video sequence to be transmitted by dividing the image into blocks having n x m pixels and deriving an identifier (FD) describing the image content of these blocks and storing the image content of the image block in a first memory (104) at an address determined by said identifier (FD), the storing taking place such that at least one image content data item remains in the memory for each identifier; (c) after the completed classification a memory address is similarly derived from an image block to be transmitted, and the image content data obtainable from the obtained memory address is used as a prediction block candidate by performing a comparison between the image blocks in a manner known *per se*; (d) if the result of the comparison fulfils a predetermined correspondence condition, said memory address is indicated to the receiver; and (e) if the predetermined correspondence condition remains unfulfilled, the image block is transmitted to the receiver in a manner known *per se*.

## Description

The invention relates to a method for the compression of a digitally encoded video image in connection with transmission, wherein image information is encoded as successive image blocks each consisting of n x m pixels, and an image block to be transmitted is compared with at least one other image block to determine the correspondence between them; and to a device for the compression of a digitally encoded video image in connection with transmission, the image information being encoded as successive image blocks each consisting of n x m pixels, the device comprising means for comparing an image block to be transmitted with at least one other image area of the same size to determine the correspondence between them, and a first memory storing the image contents of image blocks. The invention also relates to a method for receiving a video signal compressed according to the invention, and to a device for receiving a compressed video signal.

Video compression aims at reducing the number of bits required in the transmission and/or storing of a digitized image. Predictive video compression utilizes a prediction value derived e.g. from previously transmitted image material, and only the difference between the prediction value and an actual value is encoded.

At low bit rates the basic problem of video compression is insufficient channel capacity especially when there occurs extensive motion in the image (the motion, for instance, extends outside the used search area), whereby normal motion compensated prediction will not be successful.

The object of the present invention is to dispense with the above-mentioned disadvantage and provide a solution by means of which a satisfactory prediction block can be found from among the previously transmitted image material irrespective of the extent of the motion. This object is achieved by a method and a device according to the invention. The method applied in connection with transmission is characterized in that (a) at least the first image in a video sequence is transmitted as such or as compressed to a receiver, (b) image content is subjected to classification at the beginning of the video sequence to be transmitted by dividing the image into blocks having n x m pixels and deriving an identifier describing the image content of these blocks and storing the image content of the image block in a first memory at an address determined by said identifier, the storing taking place such that at least one image content data item remains in the memory for each identifier; (c) after the completed classification a memory address is similarly derived from an image block to be transmitted, and the image content data obtainable from the obtained memory address is used as a prediction block candidate by performing a comparison between the image blocks in a manner known *per se*; (d) if the result of the comparison fulfils a predetermined correspondence condition, said memory address is indicated to the receiver; and (e) if the predetermined correspondence condition remains unfulfilled, the image block is transmitted to the receiver in a manner known *per se*.

The above-mentioned classification is performed both in the transmitter and in the receiver. The method for receiving a video signal compressed in accordance with the invention is characterized by what is disclosed in the characterizing portion of the attached claim 9. The devices according to the invention are characterized by what is disclosed in the characterizing portions of the attached claims 11 and 14.

The idea of the invention is that (a) the image content is subjected to unequivocal classification at the beginning of a video sequence, and the image content (the intensity values of the pixels) of an image block belonging to each class is stored as representing the concerned class, (b) the image content of each image block to be transmitted is subjected to a similar classification, whereby the obtained classification allows a prediction block candidate, i.e. the image content stored in the memory as representing the concerned class, to be looked up immediately from the memory, and (c) the receiver is informed whether the receiver is allowed to use the block representing the concerned class.

According to an especially advantageous embodiment of the method according to the invention, the above-mentioned identifier is stored, in connection with the classification to be performed, in an auxiliary memory at an address determined by the identifier of the previous block, and the auxiliary memory is utilized in the selection of the prediction block candidate from the image memory. In this way the correlation between the locations of successive prediction blocks can be utilized in such a way that when a relatively large image area is displaced in parallel while maintaining its shape, it can be encoded with the smallest possible number of bits. The method for receiving a video signal compressed in accordance with this advantageous embodiment is characterized by what is disclosed in the characterizing portion of the attached claim 10.

In the following the invention and its preferred embodiments will be described more fully by way of example and with reference to the attached drawings, in which
Figure 1 is a block diagram illustrating an encoder according to the first embodiment of the invention;
Figure 2 is a block diagram illustrating a decoder according to the first embodiment of the invention;
Figure 3 is a block diagram illustrating an encoder according to the second embodiment of the invention; and
Figure 4 is a block diagram illustrating a decoder according to the second embodiment of the invention.

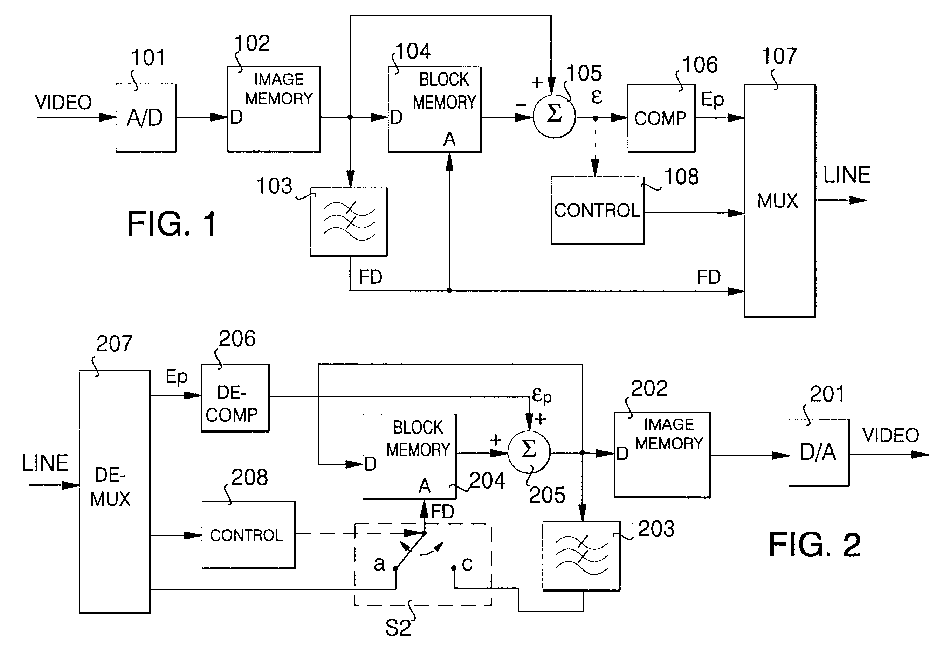

Figure 1 is a block diagram illustrating the first embodiment of an encoder according to the invention. The encoder comprises at its input an A/D converter 101, which converts an incoming video signal VIDEO into digital form. From the A/D converter the sampled video signal is applied to a data input D in an image memory 102, and digitized image information is stored in the image memory on an image-by-image basis. From the image memory the image is read onwards on a block-by-block basis.

In addition to the image memory the encoder comprises a block memory 104 having a data input D to which the output of the image memory is connected. The output is further connected to an input in a processing unit performing the image block classification, such as a filter 103, and to one input in a summing circuit 105. The output of the block memory 104 is connected to another input in the summing circuit. The summing circuit calculates a difference value describing the correspondence between an image block to be transmitted and an image block acting as a prediction block candidate in a manner known *per se*, e.g. by calculating the sum of the absolute values of the differences between the intensity values of corresponding pixels (or the sum of the squared differences). This difference will be indicated by the reference ε below, the (uncompressed) difference between the intensity values of corresponding pixels by the reference εp, and the last-mentioned compressed difference by the reference Ep.

The output of the classification filter 103 is connected to an address input A in the block memory 104 and to a multiplexer 107 having its output connected to the line. The output of the summing circuit 105 is connected both to a compression circuit 106 and to a control circuit 108 controlling the operations of the encoder. The output of both of the two last-mentioned circuits is connected to the multiplexer 107, the output signal of which is applied to the line.

The compression circuit 106 is not necessary for the encoder; it forms part of the preferred embodiment of the device, as will be seen below.

The encoder according to the invention operates in the following way. An image to be encoded is stored in the image memory 102, from which it is read block by block into the block memory 104. During the transmission of the first image of a video sequence the value of the output signal of the block memory is zero, whereby all blocks of the first image are applied as such to the compression circuit 106, where they are compressed by a compression method known *per se*, such as the DCT (Discrete Cosine Transform), and then transmitted to the line via the multiplexer 107. (The image here also refers to the field in the case of an interlaced video signal.)

After the transmission of the first image of the video sequence, the block memory 104 is initialized by displacing a block having n x m pixels on a pixel-by-pixel basis both horizontally and vertically, and the image content of each position (the intensity values of the pixels) is stored in the block memory 104 at an address FD derived from the image content of the concerned block by classifying filtration in the filter 103. The next image content data item to be stored at the same address is written over the preceding image content data item, so there is only one image content data item at a time at the same address.

Classifying filtration means that an identifier (FD) is derived from the image content of the image block e.g. by filtering. The identifier classifies the image block unequivocally into a certain class, within which the image blocks differ only slightly from each other. The image content data at each address thus describes a large number of nearly identical blocks. In place of filtering the classification processing may consist e.g. of a combination of subsampling and truncation (subsampling means that some of the samples are disregarded, while truncation means that the number of bits used per one pixel is reduced).

After the block memory 104 has been initialized as described above, the coding of the image proceeds on a block-by-block basis in such a way that the output signal FD of the filter 103 acts as a read address for the block memory 104. If an acceptable prediction block is obtained from the output of the block memory (the difference value ε obtained at the output of the summing circuit is small enough), the address data FD is transmitted to the line as well as, if considered necessary, the difference values εp, each one of which represents the difference between the intensity values of corresponding pixels in the image block to be transmitted and the prediction block. The comparison of the difference value ε with a predetermined threshold value can be performed e.g. in the control unit 108. In place of direct address data it is also possible to transmit information about the way the address can be found e.g. in the address table of the receiver.

If the device comprises the compression circuit 106, the address data and the difference values may be compressed in a manner known *per se*.

If no acceptable prediction block is found in the way described above, it is assumed that the value of the output signal of the block memory is zero, and the block to be encoded is applied as such to the compression circuit 106, from which it is transmitted after compression in a known manner to the line (via the multiplexer). The block memory is thereby updated by storing the image content of the block in the block memory at a position indicated by the corresponding address data FD.

The procedure is thereafter continued by coding the next block as described above. Initialization need not be repeated at the beginning of new images, as the image content of a block is stored in the block memory whenever no prediction block is found, and so the block memory is continuously updated.

Figure 2 shows a decoder according to the invention, where the same reference numerals as in Figure 1 have been used for the corresponding parts except that the numerals start with two (in accordance with the number of the figure).

The decoder comprises at its input a demultiplexer 207 having a first output connected to a decompression circuit 206, a second output connected to a decoder control circuit 208, and a third output connected to an input terminal a in a switch S2. The control circuit 208 controls the operation of the switch S2. The outputs of the decompression circuit 206 and a block memory 204 are connected to respective inputs in a summing circuit 205 reconstructing the intensity values. The output of the summing circuit is connected to a data input D in the block memory, to a classification filter 203 (which is similar to the classification filter of the encoder), and to a data input D in an image memory. The output of the filter is connected to an input terminal c in the switch S2, and the output terminal of the switch is connected to an address input A in the block memory. From the image memory the image information is applied to a D/A converter 201 the output of which gives the original analog video signal VIDEO.

The decoder receives the first image as such and releases possible compression in the decompression circuit 206. During the first image the output of the block memory 204 has the value zero. After the first image has been received and stored in the image memory 202, the block memory is initialized in the same way as in the transmitter (the switch is thereby in the position "c"). The reception of a new image is then started. If the FD data has been sent from the transmitter, the switch S2 is in the position "a", whereby the FD address data acts as a read address for the block memory and indicates the address of the prediction block. If the receiver has indicated that the image block has been transmitted as such (or compressed in a known manner), it is assumed that the output of the block memory is zero. In this case, the image content of the image block is stored in the block memory 204 at an address obtained from the filter 203. The switch S2 is thereby in the position "c".

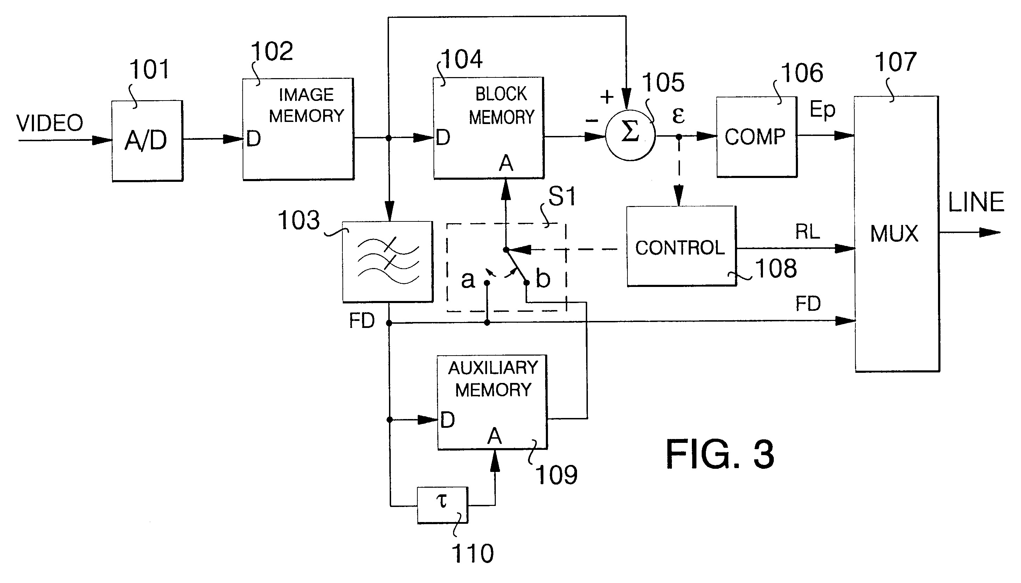

Figure 3 illustrates the encoder according to the second embodiment of the invention. In this case the encoder further comprises an auxiliary memory 109, which is used to predict an identifier FD for each block to be encoded. The output of the filter 103 is now connected to a data input D in the auxiliary memory 109, to an input in a delay unit 110 corresponding to the processing of one image block, to a first input terminal a in a switch S1, and to an input in a multiplexer 107. The output of the delay unit 110 is connected to an address input A in the auxiliary memory 109, and the output of the auxiliary memory is connected to a second input terminal b in the switch S1. The output terminal of the switch is connected to an address input A in the block memory 104. A control unit 108 controls the operation of the switch S1.

The encoder shown in Figure 3 operates in the following way. An image to be encoded is stored in the image memory 102, from which it is read block by block into the block memory 104. During the transmission of the first image of a video sequence, the value of the output signal of the block memory is zero, whereby all blocks in the first image are applied as such to the compression unit 106 and then transmitted after compression in a known manner, such as by the DCT, to the line via the multiplexer 107.

After the first image has been transmitted, the block memory 104 is initialized by displacing a block having n x m pixels on a pixel-by-pixel basis both horizontally and vertically, and the image content of each position is stored in the block memory 104 at an address FD as described above. The switch S1 is thereby in the position "a".

Correspondingly, the auxiliary memory 109 is initialized such that each address FD derived in the filter 103 is stored, via the delay unit 110, at a memory position the address of which is the address FD corresponding to the preceding image block.

After the block memory and the auxiliary memory have been initialized, the coding of the image proceeds on a block-by-block basis while the switch is initially in the position "b". The address FD derived from the preceding encoded image block is thereby used as read address data for the auxiliary memory 109, whereby a prediction value for the identifier of the block to encoded is obtained from the output of the auxiliary memory. If this prediction value, which is now used as a read address for the block memory 104, produces from the block memory a block such that the difference ε between the intensity values of it and the block to be encoded is approximately zero, this image block is accepted as a prediction block and the control unit transmits a code RL via the multiplexer to the line. The code indicates the receiver that the prediction block can be found by the use of the preceding block. The code RL may be e.g. 1 bit. The pixel-specific difference values εp can, if considered necessary, be transmitted (compressed or as such) or left untransmitted. If the difference values are transmitted, the error will be eliminated totally in the receiver.

If the prediction image block cannot be found as described above (the obtained difference value ε is too great and does not fulfil the set correspondence condition), the switch S1 is turned to the position "a", whereby the output signal of the filter 103 acts as a read address for the block memory 104. If an acceptable prediction block is now obtained from the output of the block memory (the obtained difference value ε is small enough), the address data FD and possibly again the difference values εp are transmitted to the line.

If no acceptable prediction block is found in this way either, it is assumed that the value of the output signal of the block memory 104 is zero, whereby the block to be encoded is applied as such to the compression unit 106, and the block is transmitted to the line after having been compressed in a known manner. The image content of the block is thereby stored in the block memory 104 at a position indicated by the address FD, and the address FD is stored in the auxiliary memory 109 at a position indicated by the preceding address FD.

The procedure is then continued by coding the next image block as described above.

The embodiment shown in Figure 3 utilizes the correlation between the locations of successive prediction blocks. When a relatively large image area is displaced in parallel while maintaining its shape, it is thereby possible to encode the concerned image area with the smallest possible number of bits (the RL code may be only 1 bit in length).

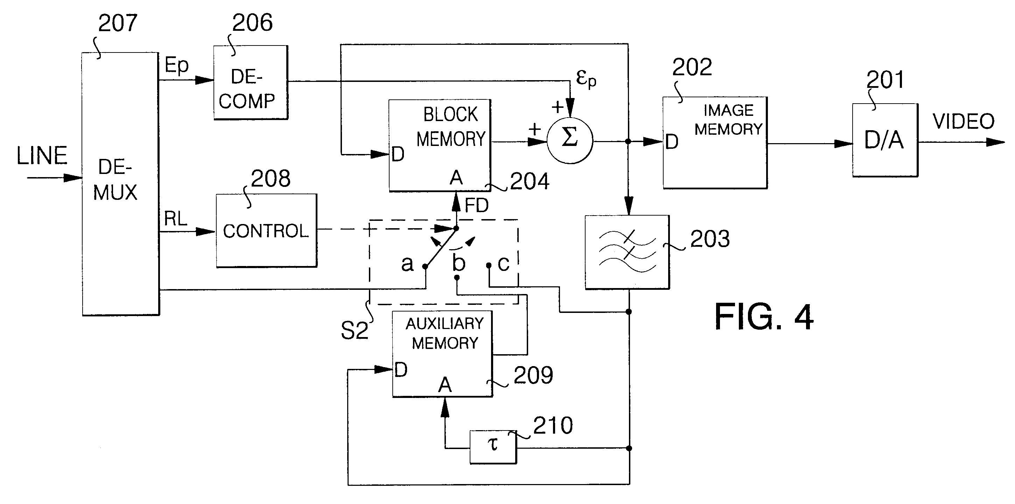

Figure 4 is a block diagram illustrating a decoder according to the second embodiment of the invention. In this case the decoder further comprises, similarly as the encoder, an auxiliary memory 209 and a delay unit 210. The output of the auxiliary memory thus forms the input terminal b of the switch S2. The output of the filter is connected, similarly as in the encoder, to the data input of the auxiliary memory and to the address input A of the auxiliary memory via the delay unit 210 corresponding to the processing of one image block.

The operation of the decoder corresponds to the operation of the decoder shown in Figure 2 except that in this case the received RL signal controls the switch S2 to the position "b", whereby the new block can be found from the block memory on the basis of the preceding block.

Even though the invention has been described above with reference to the examples shown in the attached drawings, it is obvious that the invention is not limited to them, but it may be modified within the inventive idea disclosed above and in the attached claims. For instance, to decrease the block memory, it would be possible to encode sub-blocks, e.g. image blocks having 4 x 4 pixels could be encoded in place of an image block having 8 x 8 pixels. Read and write addresses for the block and auxiliary memories need not either be derived directly as a result of the processing performed by the processing unit (103 or 203), but they may be derived in an additional step on the basis of an identifier obtained from the processing unit and representing a particular class. It is also possible to store more than one image content data item per address in the memory, which, however, complicates the device unnecessarily.

## Claims

1. Method for the compression of a digitally encoded video image in connection with transmission, wherein image information is encoded as successive image blocks each consisting of n x m pixels, and an image block to be transmitted is compared with at least one other image block to determine the correspondence between them, **characterized** in that
- at least the first image in a video sequence is transmitted as such or as compressed to the receiver;
- image content is subjected to classification at the beginning of the video sequence to be transmitted by dividing the image into blocks having n x m pixels and deriving an identifier (FD) describing the image content of these blocks and storing the image content of the image block in a first memory (104) at an address determined by said identifier (FD), the storing taking place such that at least one image content data item remains in the memory for each identifier;
- after the completed classification a memory address is similarly derived from an image block to be transmitted, and the image content data obtainable from the obtained memory address is used as a prediction block candidate by performing a comparison between the image blocks in a manner known *per se*;
- if the result of the comparison fulfils a predetermined correspondence condition, said memory address is indicated to the receiver; and
- if the predetermined correspondence condition remains unfulfilled, the image block is transmitted to the receiver in a manner known *per se*.

2. Method according to claim 1, **characterized** in that
- in connection with the classification to be performed, said identifier (FD) is additionally stored in an auxiliary memory (109) at an address determined by the identifier (FD) of the preceding block; and
- before the memory address derived from the image block to be transmitted is used for the selection of a prediction block from the first memory (104), a prediction block candidate is selected from a memory position of the first memory (104) determined by the identifier obtained from the memory address of the auxiliary memory (109) determined by the identifier (FD) of the preceding transmitted image block, and (a) if the result from the performed image block comparison fulfils the predetermined correspondence condition, a code (RL) is transmitted to the receiver, which code indicates that the prediction image block has been found in said way by means of the preceding block, and (b) if the predetermined correspondence condition remains unfulfilled, the procedure is continued by using the memory address derived from the image block to be transmitted for the selection of the prediction block candidate from the first memory (104).

3. Method according to claim 1 or 2, **characterized** in that said classification is performed on all blocks having n x m pixels that are derivable from the image by displacing a block having n x m pixels over the entire image on a pixel-by-pixel basis.

4. Method according to claim 1 or 2, **characterized** in that said classification is performed after the transmission of the first image of the video sequence.

5. Method according to claim 1 or 2, **characterized** in that whenever the predetermined correspondence condition remains unfulfilled for a block to be transmitted, the image content of the concerned block is stored in the first memory (104) at an address determined by the identifier of the block to be transmitted.

6. Method according to claim 1, **characterized** in that said identifier (FD) is derived from the image content of the image block by filtering.

7. Method according to claim 1, **characterized** in that said identifier is derived from the image content of the image block by subsampling and truncation.

8. Method according to claim 1, **characterized** in that information about said memory address is transmitted in compressed form.

9. Method for receiving a video signal compressed as described in claim 1, wherein image information is received as successive image blocks each consisting of n x m pixels, **characterized** in that
- image content is subjected to classification at the beginning of a video sequence to be received by dividing the image into blocks having n x m pixels and deriving an identifier (FD) describing the image content of these blocks and storing the image content of the image block in a first memory (204) at an address determined by said identifier (FD), the storing taking place such that at least one image content data item remains in the memory for each identifier; and
- on receiving memory address data (FD) from the transmitter, the block to be received is selected from the first memory (204) from a memory position indicated by said address data.

10. Method for receiving a video signal compressed as described in claim 2, wherein image information is received as successive image blocks each consisting of n x m pixels, **characterized** in that
- image content is subjected to classification at the beginning of a video sequence to be received by dividing the image into blocks having n x m pixels and deriving an identifier (FD) describing the image content of these blocks and storing the image content of the image block in a first memory (204) at an address determined by said identifier (FD), the storing taking place such that at least one image content data item remains in the memory for each identifier; and
- in connection with the classification to be performed, said identifier (FD) is additionally stored in an auxiliary memory (209) at an address determined by the identifier (FD) of the preceding block;
- on receiving the memory address data (FD) from the transmitter, the block to be received is selected from the first memory (204) from a memory position indicated by said address data; and
- on receiving said code (RL) from the transmitter, the block to be received is selected from a memory address of the first memory (204) determined by the identifier obtained from the memory address of the auxiliary memory (209) determined by the identifier (FD) of the preceding received image block.

11. Device for the compression of a digitally encoded video image in connection with transmission, the image information being encoded as successive image blocks each consisting of n x m pixels, the device comprising
- means (105, 108) for comparing an image block to be transmitted with at least one other image area of the same size to determine the correspondence between them; and
- a first memory (104) for storing the image contents of image blocks, **characterized** in that it further comprises
- classification means (103) for deriving an image block class identifier (FD) corresponding to the image block from the image content of the image block; and
- address forming means (103; S1) for forming write and read addresses from the derived identifier (FD) for writing into said first memory and reading from said first memory, respectively.

12. Device according to claim 11, **characterized** in that the address forming means comprise
- storing means (109, 110) for storing the identifier (FD) derived for the image block at a memory position determined by the identifier corresponding to the preceding block; and
- selector means (S1) connected operationally to said classification means (103) and said storing means (109, 110) for selecting an identifier (FD) determining the memory address of the first memory (104) from either one of said means.

13. Device according to claim 11, **characterized** in that said classification means comprise a filter (103).

14. Device for receiving a digital video signal compressed at the transmission end, the image information being received as successive image blocks each consisting of n x m pixels, the device comprising
- a first memory (204) in which the image contents of received image blocks are stored; and
- reception means (207) for receiving information concerning memory addresses from the line for reading from said first memory (204), **characterized** in that it further comprises
- classification means (203) for deriving an image block class identifier (FD) corresponding to the image block from the image content of the image block;
- address forming means (203) for forming write addresses from the derived identifier (FD) for writing into said first memory (204); and
- selector means (S2) connected operationally to said address forming means (203) and said reception means (207) for selecting information concerning the memory address of the first memory (204) from said classification means (203) or said reception means (207).

15. Device according to claim 14, **characterized** in that it further comprises storing means (209, 210) for storing the identifier (FD) derived for the image block at a memory position determined by the identifier corresponding to the preceding block, and that said selector means (S2) are connected operationally to the storing means for selecting information concerning the memory address of the first memory (204) from the storing means.
